# EUROPÄISCHE PATENTSCHRIFT

(11) **EP 1 834 754 B1**
(45) Veröffentlichungstag und Bekanntmachung des Hinweises auf die Patenterteilung: **11.12.2013**
(21) Anmeldenummer: 07004797.2
(22) Anmeldetag: 08.03.2007
(51) Int. Cl.: B29C 65/06, B06B 1/04

(54) **Vibrationsschweissanlage und Schwingkopf hierfür**
Vibration welding facility and vibrating head therefor
Installation de soudure par vibrations et sa tête vibrante

(30) Priorität: 15.03.2006 DE 102006011971
(43) Veröffentlichungstag der Anmeldung: 19.09.2007
(73) Patentinhaber: Branson Ultraschall Niederlassung der Emerson Technologies GmbH & CO., 63128 Dietzenbach (DE)
(72) Erfinder: Lotz, Wilfried, Dr., 63543 Neuberg (DE); Priem, Heiko, 63636 Brachtal (DE); Vetter, Jörg, 64839 Münster (DE)
(74) Vertreter: Heyer, Volker

(56) Entgegenhaltungen:
- DE-A1- 4 211 279
- US-A- 3 920 504

## Beschreibung

Die vorliegende Erfindung betrifft eine Vibrationsschweißanlage sowie einen Schwingkopf hierfür.

Ein Schwingkopf für eine Vibrationsschweißmaschine besteht üblicherweise aus einem stationären Massekörper, einem Werkzeugträger mit einem Werkzeug zum Halten eines Werkstückes (Kunststoffteil) sowie einem elektromagnetischen Antrieb mit einer bestrombaren Spulenanordnung und einer Weicheisenanordnung, die auf einer gemeinsamen Antriebsachse liegen und durch einen Luftspalt voneinander getrennt sind. Die Spulenanordnung ist am Massekörper festgelegt, und die Weicheisenanordnung ist über eine Federanordnung mit dem Werkzeugträger so verbunden, dass der Werkzeugträger zusammen mit dem Werkzeug lineare Schwingungen längs einer Schweißachse ausführen kann.

Dem schwingenden Werkzeug ist üblicherweise ein stationäres Werkzeug zum Halten eines zweiten Werkstückes (Kunststoffteiles) zugeordnet, das gegen das schwingende Werkstück angedrückt wird, so dass die beiden Werkstücke (Kunststoffteile) mechanisch gegeneinander gerieben werden und der Kunststoff an der Grenzschicht durch Reibungswärme plastifiziert wird, um die beiden Werkstücke miteinander zu verschweißen.

Bei den vorbekannten Vibrationsschweißanlagen besteht der Schwingkopf üblicherweise aus zwei stationär angeordneten Spulenanordnungen, die durch eine Brücke miteinander verbunden sind, und einem Schwinger in Form zweier Weicheisenanordnungen und eines Werkzeugträgers, die über eine Federanordnung an der Brücke aufgehängt sind. Die Federanordnung besteht üblicherweise aus einem Federpaket mit senkrecht verlaufenden Federstegen, die an ihren oberen Enden mit dem Brückenglied und an ihren unteren Enden mit dem Werkzeug bzw. Werkzeugträger fest verbunden sind, so dass die unteren Enden der Federstege relativ zu den oberen Enden der Federstege ausgelenkt und dadurch das Werkzeug in Schwingungen versetzt werden können.

Wenngleich sich derartige Vibrationsschweißanlagen in der Praxis bewährt haben, unterliegen sie jedoch gewissen Beschränkungen:

Die beschriebene Ausbildung der Federanordnung sowie die Anbringung des schwingenden Werkzeuges an der Unterseite des Federpakets führt dazu, dass die Schweißachse, längs der der Schweißvorgang erfolgt, und die Antriebsachse des elektromagnetischen Antriebs radial zueinander versetzt sind. Es entsteht somit ein Hebelarm zwischen der Antriebsachse und der Schweißachse, durch den ein Kippmoment auf die zu verschweißende Werkstücke ausgeübt wird. Außerdem wird der linearen Bewegung des schwingenden Werkzeugs eine Auf- und Abbewegung überlagert, was sich nachteilig auf den Schweißvorgang auswirken kann.

Als weitere konstruktive Beschränkungen sind ein relativ großer Platzbedarf sowie eine festliegende, nur wenig variable Geometrie der Vibrationsschweißanlage zu nennen. Die Federanordnung ist relativ komplex und kostspielig in der Herstellung.

Im Oberbegriff des Anspruchs 1 wird von einem Schwingkopf für eine Vibrationsschweißanlage nach US 3 920 504A ausgegangen. Bei diesem Schwingkopf besteht die Federanordnung aus zwei stabförmigen Blattfedern rechteckigen Querschnitts.

Der vorliegenden Erfindung liegt die Aufgabe zugrunde, einen Schwingkopf für eine Vibrationsschweißanlage zu schaffen, der konstruktiv einfach ist, einen kompakten Aufbau hat, kostengünstig herstellbar ist und eine große Vielfalt geometrischer Gestaltungsmöglichkeiten für die Vibrationsschweißanlage eröffnet. Ferner soll eine Vibrationsschweißanlage mit einem derartigen Schwingkopf geschaffen werden, die aufgrund der unterschiedlichen geometrischen Gestaltungsmöglichkeiten für eine Vielzahl von Anwendungen geeignet ist.

Diese Aufgabe wird durch einen Schwingkopf gemäß Anspruch 1 sowie durch eine Vibrationsschwe.ißanlage gemäß den Ansprüchen 11 und 12 gelöst.

Bei dem erfindungsgemäß ausgebildeten Schwingkopf weist die Federanordnung mindestens eine auf der Antriebsachse senkrecht stehende kreisrunde Federscheibe auf, die in einem Umfangsbereich am Massekörper festgelegt ist und in einem zentralen Bereich mit der Weicheisenanordnung und dem Werkzeugträger fest verbunden ist.

Bei dem erfindungsgemäß ausgebildeten Schwingkopf sind somit sowohl die Federanordnung wie auch der Werkzeugträger zentrisch zur Antriebsachse des elektromagnetischen Antriebs angeordnet. Die Federscheibe bzw. die Federscheiben zusammen mit dem daran befestigten Werkzeugträger führen daher während des Reibschweißvorgangs lineare Schwingungen längs der Antriebsachse aus. Den Schwingungen der Federanordnung und des Werkzeugträgers - und somit des Werkstückes - sind somit keine Auf- und Abbewegungen überlagert; vielmehr führen sie rein lineare Bewegungen aus.

Mit Hilfe eines derartigen Schwingkopfes lässt sich daher ein Schwingsystem verwirklichen, bei dem die Schweißachse mit der Antriebsachse zusammenfällt. Andererseits kann das Werkzeug am Werkzeugträger auch so befestigt werden, dass die Schweißachse gegenüber der Antriebsachse radial versetzt ist, was für manche Anwendungsfälle von Vorteil sein kann.

Der erfindungsgemäß ausgebildete Schwingkopf ist konstruktiv einfach, hat einen kompakten Aufbau und ist kostengünstig herstellbar. Darüber hinaus eröffnet er eine Vielzahl unterschiedlicher geometrischer Gestaltungsmöglichkeiten für die Vibrationsschweißanlage.

So kann der Schwingkopf als einzelner Schwingkopf ausgebildet und betrieben werden, wobei das Werkzeug am Werkzeugträger frei kragend angebracht wird. Stattdessen können jedoch auch zwei oder mehr Schwingköpfe mechanisch und/oder elektrisch miteinander gekoppelt werden, um Vibrationsschweißanlagen beliebiger geometrischer Konfiguration zu bilden.

Weitere vorteilhafte Ausgestaltungen und Weiterbildungen der Erfindung sind in den abhängigen Ansprüchen definiert.

Anhand der Zeichnungen werden Ausführungsbeispiele der Erfindung näher erläutert. Es zeigt:
Fig. 1 eine perspektivische Ansicht eines erfindungsgemäß ausgebildeten Schwingkopfes ohne Werkzeug;
Fig. 2 einen Längsschnitt durch den Schwingkopf der Fig. 1;
Fig. 3 einen der Fig. 2 entsprechenden Längsschnitt des Schwingkopfes mit schematisch angedeutetem schwingenden und stationären Werkzeugen und zu verschweißenden Werkstücken;
Fig. 4 einen der Fig. 3 entsprechenden Längsschnitt eines Schwingkopfes mit einem abgewandelten Werkzeug zum Verschweißen von drei Werkstücken;
Fig. 5 bis 8 Längsschnitte durch unterschiedliche Ausführungsformen einer Vibrationsschweißanlage mit zwei Schwingköpfen gemäß den Figuren 1, 2.

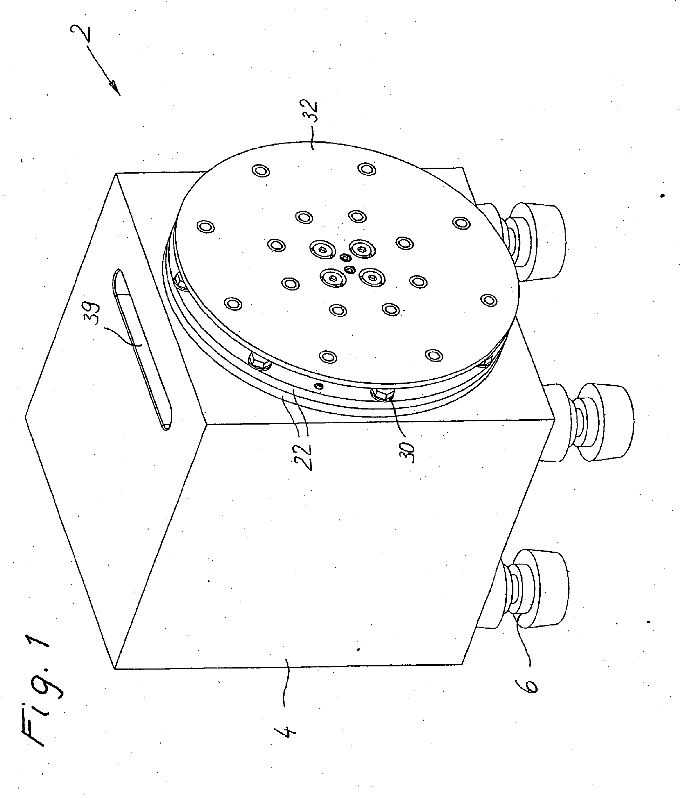

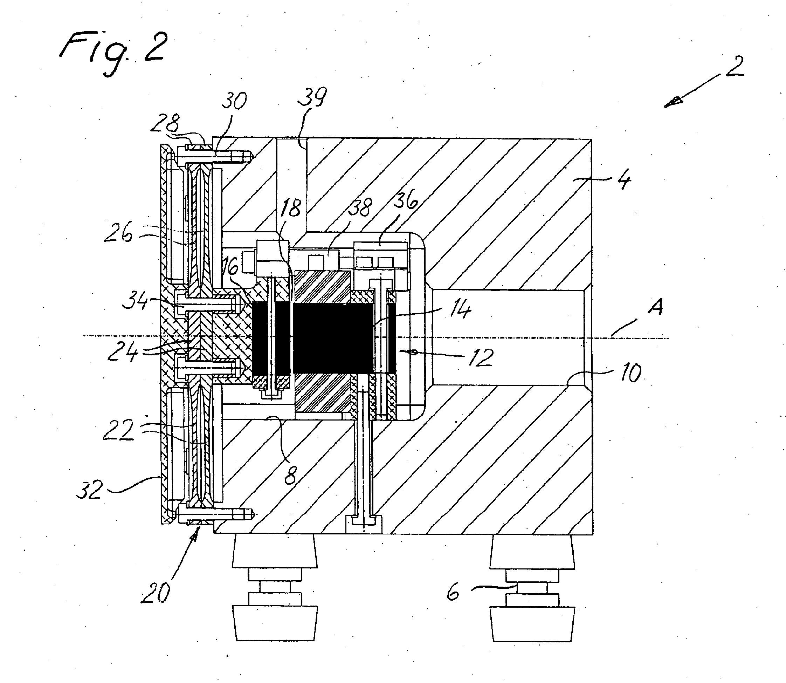

Der in den Figuren 1 und 2 dargestellte Schwingkopf 2 weist einen Massekörper 4 einer großen Masse auf, der über vier Gummidämpfer oder andere Dämpfer 6 am Boden abgestützt ist. In einer durchgehenden Bohrung des Massekörpers 4, die sich aus Bohrungsabschnitten 8 und 10 unterschiedlichen Durchmessers zusammensetzt, ist ein elektromagnetischer Antrieb 12 untergebracht.

Der elektromagnetische Antrieb 12 setzt sich aus einer bestrombaren Spulenanordnung 14 und einer Weicheisenanordnung 16 in Form eines Laminatpakets zusammen, die auf einer gemeinsamen Antriebsachse A liegen und durch einen Luftspalt 18 voneinander getrennt sind. Die Weicheisenanordnung 16 sowie ein Werkzeugträger 32 sind durch eine Federanordnung 20 so aufgehängt, dass sie lineare Schwingungen längs der Antriebsachse A ausführen können, wie noch genauer erläutert wird.

Die Federanordnung 20 besteht im dargestellten Ausführungsbeispiel aus zwei tellerfederähnlichen Federscheiben 22, die eine zentrale Achse haben, welche mit der Antriebsachse A zusammenfällt. Die Federscheiben 22 liegen somit in Ebenen, die auf der Antriebsachse A senkrecht stehen.

Jede der Federscheiben 22 setzt sich aus einem zentralen Abschnitt 24, einem querschnittsverringerten Zwischenabschnitt 26 und einem Umfangsabschnitt 28 zusammen. Wie in Fig. 2 zu sehen ist, haben der zentrale Bereich 24 und der Umfangsbereich 28 jeder Federscheibe 22 die gleiche Dicke, während der Zwischenabschnitt 26 eine gegenüber den Bereichen 24 und 28 verringerte Dicke hat. Die Federscheiben 22 liegen an ihren zentralen Bereichen 24 und Umfangsbereichen 28 aneinander an, wobei sie an ihren Umfangsbereichen durch Schraubverbindungen 30 am Massekörper 4 festgelegt sind. Ihre zentralen Bereiche 24 sind durch Schraubverbindungen 34 mit der Weicheisenanordnung 16 fest verbunden.

Die Federscheiben 22 sind im dargestellten Ausführungsbeispiel kreisrund, wie aus Fig. 1 hervorgeht. Der Querschnittsverlauf der Zwischenabschnitte 26 der Federscheiben 22 ist so gestaltet, dass die Federrate der Federscheiben 22 über den gesamten Arbeitsbereich konstant ist.

Es versteht sich, dass je nach Anwendungsfall statt zwei Federscheiben nur eine Federscheibe oder mehr als zwei Federscheiben verwendet werden können. Entscheidend ist, dass die Federscheiben 22 in einem Umfangsbereich am Massekörper 4 "aufgehängt" sind und in einem zentralen Bereich mit der Weicheisenanordnung 16 und dem Werkzeugträger 32 fest verbunden sind, um auf diese eine Rückstellkraft auszuüben, wie noch genauer erläutert wird.

Auf der von der Weicheisenanordnung 16 abgewandten Seite der Federanordnung 20 ist der als Platte ausgebildete Werkzeugträger 32 angeordnet. Der plattenförmige Werkzeugträger 32 liegt in einer Ebene, die parallel zu den Ebenen der Federscheiben 22 ist; der Werkzeugträger 32 steht somit ebenfalls auf der Antriebsachse A senkrecht.

Der Werkzeugträger 32 liegt in seinem zentralen Bereich am zentralen Bereich 24 der Federscheiben 22 an und ist mit diesen fest verbunden, während der übrige Bereich des Werkzeugträgers 32 zu der Federanordnung 20 beabstandet ist. Der Werkzeugträger 32 führt daher die gleichen linearen Schwingungen wie die Federscheiben 22 und die Weicheisenanordnung 16 aus.

Es wird nun die Funktionsweise des beschriebenen Schwingkopfes 2 näher erläutert:
Wird an die Spulenanordnung 12 eine elektrische Spannung angelegt, so wird in der Spulenanordnung eine elektromagnetische Kraft induziert, die die Weicheisenanordnung 16 und damit den Werkzeugträger 32 entgegen der Rückstellkraft der Federanordnung 20 in Richtung auf die Spulenanordnung 12 zu ziehen sucht. Beim Abschalten der elektrischen Spannung sucht die Federanordnung 20 die Spulenanordnung 16 und den Werkzeugträger 32 wieder in die Ruhelage zurückzubringen, nicht jedoch ohne vorher durch die in der Federanordnung 20 gespeicherte Energie in die entgegengesetzte Richtung über die Ruhelage hinaus bewegt zu werden. Im Idealfall geringer Verluste erfolgt dies nahezu mit derselben Amplitude wie bei der Bewegung in Richtung auf die Spulenanordnung 12. Wird nun eine Wechselspannung an die Spulenanordnung 12 angelegt, so führen die Weicheisenanordnung 16 und der Werkzeugträger 32 eine lineare Schwingbewegung aus, die als Antrieb für eine Vibrationsschweißanlage genutzt werden kann.

Besonders effektiv arbeitet der Schwingkopf 2 dann, wenn als Arbeitsfrequenz für die elektrische Ansteuerung des elektromagnetischen Antriebs 12 diejenige Frequenz gewählt wird, welche mit der mechanischen Resonanzfrequenz korrespondiert. Die mechanische Resonanzfrequenz ergibt sich im Wesentlichen durch die Federrate der Federanordnung 20 und die beteiligten schwingenden Massen. Bei einer bevorzugten Ansteuerung des elektromagnetischen Antriebs 12 ergibt sich die elektrische Resonanzfrequenz genau als die Hälfte der mechanischen Resonanzfrequenz.

Zur Überwachung und Regelung bzw. Steuerung der Frequenz und Amplitude der linearen Schwingbewegung des Schwingkopfes ist eine Messeinrichtung vorgesehen, die im dargestellten Ausführungsbeispiel aus einem Aufnehmer (pick-up coil) mit einer Erregerspule 36 und einem Magnetstift 38 besteht. Es versteht sich, dass jedoch auch andere Ausführungsformen der Messeinrichtung möglich sind. Mit Hilfe der Messeinrichtung wird sichergestellt, dass der während der Schwingung größer und kleiner werdende Luftspalt 18 aufgrund der Regelung bzw. Steuerung immer größer 0 bleibt, dass also die Spulenanordnung 14 und die Weicheisenanordnung 16 nicht in Anlage aneinander gelangen. Über einen Schlitz 39 im Massekörper 4 lässt sich der Luftspalt 18 überwachen und gegebenenfalls ändern.

Aufgrund der Schwingungen der Weicheisenanordnung 16 und des Werkzeugträgers 32 führt auch der Massekörper 4 entsprechende Schwingungen aus, die gegenphasig und mit deutlich geringerer Amplitude erfolgen. Die Schwingungen des Massekörpers 4 werden durch die Dämpfer 6 gedämpft.

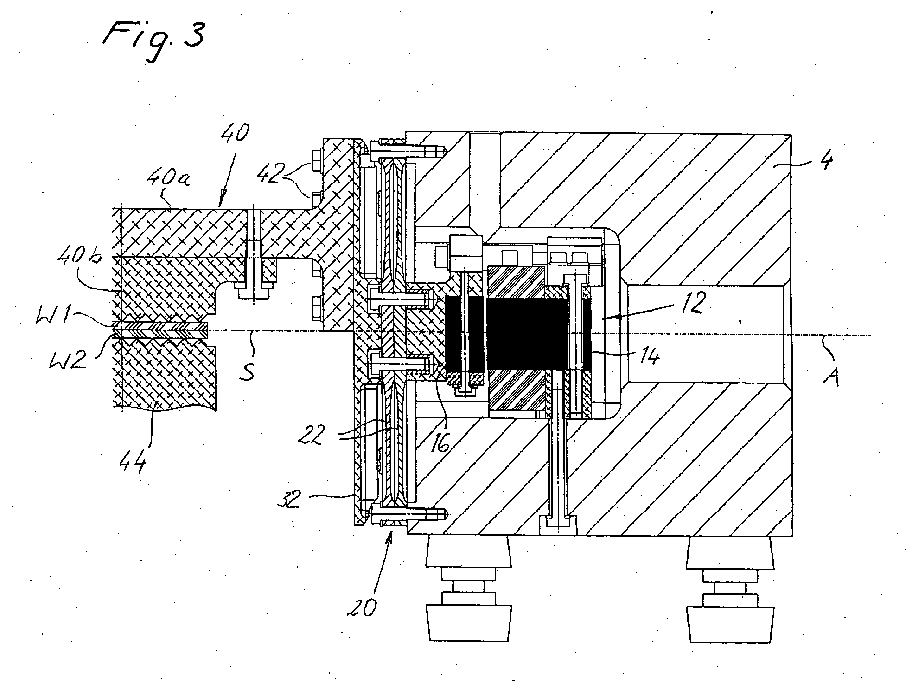

Um den in den Figuren 1 und 2 dargestellten Schwingkopf 2 als Antrieb für eine Vibrationsschweißanlage zu nutzen, wird am Werkzeugträger 32 ein Werkzeug zur Aufnahme eines zu verschweißenden Werkstückes (Kunststoffteiles) angebracht, wie anhand verschiedener Ausführungsformen von Vibrationsschweißanlagen in den Figuren 3 bis 8 näher erläutert wird.

Bei dem in Fig. 3 dargestellten Ausführungsbeispiel ist der Schwingkopf 2 als einzelner Schwingkopf ausgebildet, an dessen Werkzeugträger 32 ein Werkzeug 40 zur Aufnahme eines Werkstückes W1 durch Schrauben 42 lösbar angebracht ist. Im dargestellten Ausführungsbeispiel setzt sich das Werkzeug 40 aus zwei Werkzeugteilen 40a und 40b zusammen, von denen das Werkzeugteil 40a an der vom Antrieb 12 abgewandten Seite des Werkzeugträgers 32 so angeflanscht ist, dass sich das Werkzeug 40 vom Werkzeugträger 32 frei kragend weg erstreckt.

In dem einfachen Ausführungsbeispiel der Fig. 3 ist das Werkzeugteil 40b als rautierte Platte ausgebildet, unter der ein zu verschweißendes Werkstück W1 (Kunststoffteil), hier vereinfacht als Platte dargestellt, gelegt wird. Das Werkstück W1 ist mit einem Werkstück W2, ebenfalls vereinfacht als Platte dargestellt, zu verschweißen, welches von einem lediglich angedeuteten stationären Werkstück 44 in Anlage mit dem Werkstück W1 gedrückt wird. Die Anordnung ist hierbei so getroffen, dass die Schweißfläche zwischen den beiden Werkstücken W 1 und W2 und damit die Schweißachse S auf der Antriebsachse A liegt.

Da die Federscheiben 22 und der daran befestigte Werkzeugträger 32 zentrisch zur Antriebsachse A angeordnet sind, erfolgt die Auslenkung der Federscheiben 22 und somit die Schwingung des Werkzeugträgers 32, des Werkzeuges 40 und des Werkstückes W1 rein linear in bzw. parallel zu der Längsachse A, also ohne vertikale Komponente. Dies gilt im Übrigen nicht nur für das Ausführungsbeispiel der Figur 3, sondern auch für alle Ausführungsformen der anderen Figuren.

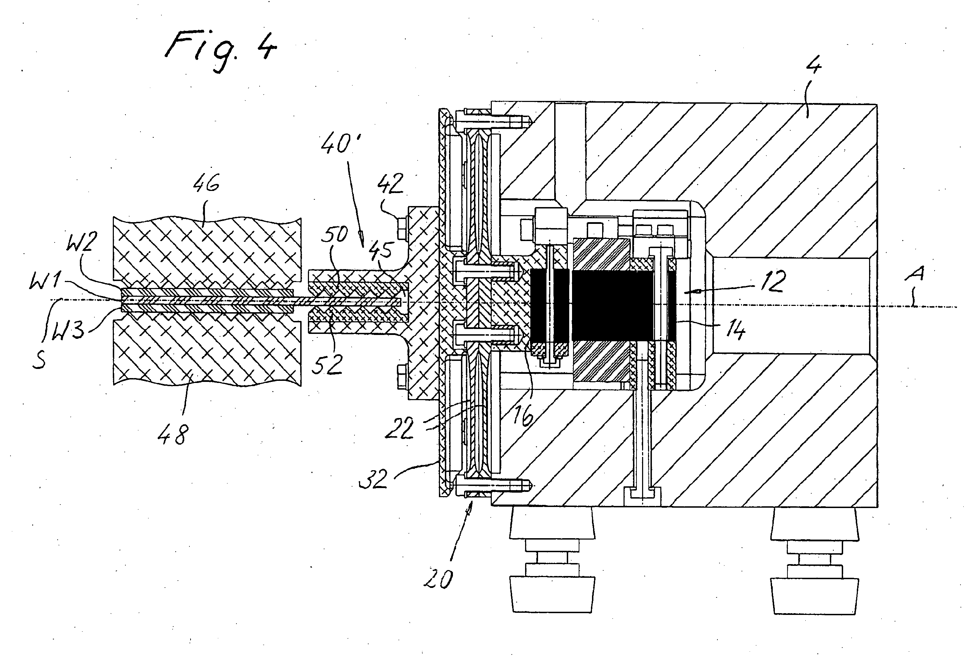

Während bei der Schweißanlage der Fig. 3 zwei Werkstücke W1 und W2 miteinander verschweißt werden, ist die Schweißanlage der Fig. 4 so ausgebildet, dass drei Werkstücke W1, W2 und W3 miteinander verschweißt werden. Zu diesem Zweck ist das Werkzeug 40' mittig am Werkzeugträger 32 angebracht, und es besitzt eine zentrale Ausnehmung 45 zur Aufnahme des Werkstückes W1. Dem schwingenden Werkzeug 40' sind zwei stationäre Werkzeuge 46 und 48 zugeordnet, die zwei Werkstücke W2 und W3 gegen die gegenüberliegenden Seiten des schwingenden Werkstückes W 1 andrücken, wodurch das Werkstück W1 an einer Schweißfläche mit dem Werkstück W2 und an einer zweiten Schweißfläche mit dem Werkstück W3 verbunden wird. Da das schwingende Werkstück W1 in der Antriebsachse A liegt, führt es wiederum lineare Schwingungen längs der Antriebsachse aus, ohne Auf- und Abbewegungen auszuführen und ohne ein Kippmoment zu erzeugen.

Bei den Ausführungsbeispielen der Figuren 3 und 4 enthält die Vibrationsschweißanlage nur einen einzigen Schwingkopf 2, was einen konstruktiv einfachen und kompakten Aufbau ermöglicht. Ein weiterer Vorteil dieser Konfiguration besteht darin, dass der Platz auf der vom Antrieb abgewandten Seite des Werkzeugträgers 32 nicht durch störende Bauteile beeinträchtigt wird. Das Werkzeug 40 bzw. 40" kann daher praktisch an jede Form der zu verschweißenden Werkstücke angepasst werden.

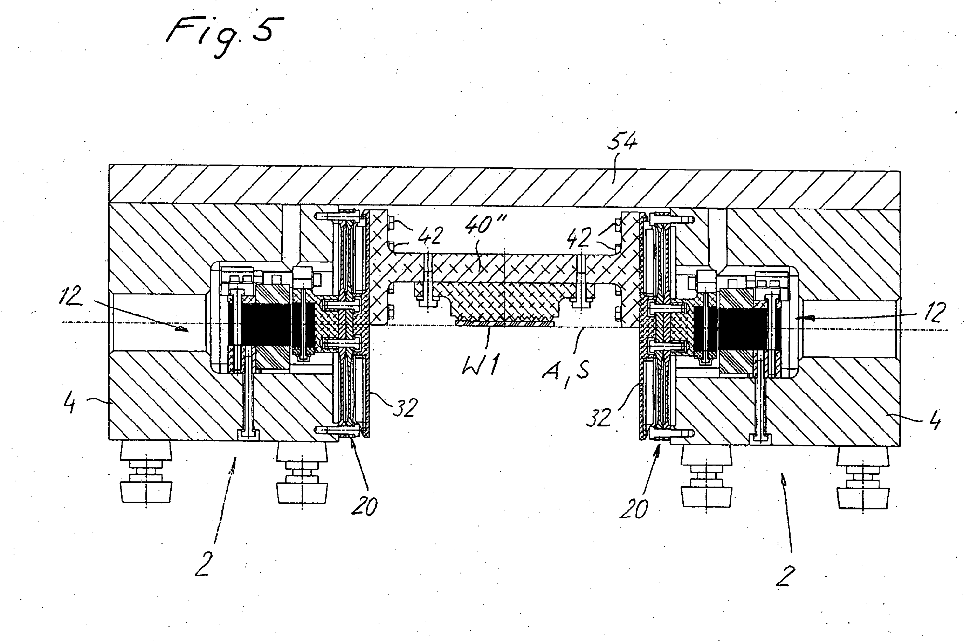

Bei den in den Figuren 5 bis 8 dargestellten Ausführungsformen der Vibrationsschweißanlage sind jeweils zwei Schwingköpfe 2 spiegelsymmetrisch zueinander in vorgegebenem Abstand angeordnet, wobei die Werkzeugträger 32 der beiden Schwingköpfe 2 durch ein gemeinsames Werkzeug 40" miteinander verbunden sind. Das Werkzeug 40" ist in den dargestellten Ausführungsbeispielen ein parallel zur Antriebsachse A verlaufendes Trägerteil, das an seinen entgegengesetzten Enden jeweils durch einen Flansch an dem zugehörigen Werkzeugträger 32 des betreffenden Schwingkopfes durch Schrauben 42 lösbar angebracht ist.

Bei dem Ausführungsbeispiel der Fig. 5 ist die Anordnung so getroffen, dass die Schweißachse S, in der das Werkstück W1 seine linearen Schwingungen ausführt, mit der Antriebsachse A zusammenfällt. Der Einfachheit halber sind in Fig. 5 das andere Werkstück und das stationäre Werkzeug nicht dargestellt.

Bei der Ausführungsform der Fig. 5 sind die beiden Schwingköpfe 2 nicht nur über das gemeinsame Werkzeug 40", sondern auch durch ein Brückenglied 54 mechanisch miteinander gekoppelt. Das Brückenglied 54 verbindet die Massekörper 4 der beiden Schwingköpfe 2, so dass sie ein einheitliches Massensystem bilden.

Bei dieser Ausführungsform werden die Spulenanordnungen 14 der beiden Schwingköpfe 2 abwechselnd elektrisch angesteuert, um eine harmonische Schwingung der Weicheisenanordnungen 16, der Werkzeugträger 32, des gemeinsamen Werkzeugs 40" und somit des Werkstückes W1 zu erzeugen. Die Federanordnungen 20 der beiden Schwingköpfe 2 werden somit nur noch zur Rückstellung des "Schwingers" in die Ruhelage bzw. zusammen mit den schwingenden Massen zum Erzeugen einer mechanischen Resonanzfrequenz benötigt. Die Auslenkungen des "Schwingers" aus der Ruhelage in beide Richtungen werden von den beiden Spulenanordnungen 14 erzeugt, die abwechselnd elektrisch angesteuert werden. Hierdurch entsteht eine stabile und funktionssichere Vibrationsschweißanlage, bei der wiederum das Werkstück W1 rein lineare Schwingungen ohne überlagerte vertikale Komponenten ausführt.

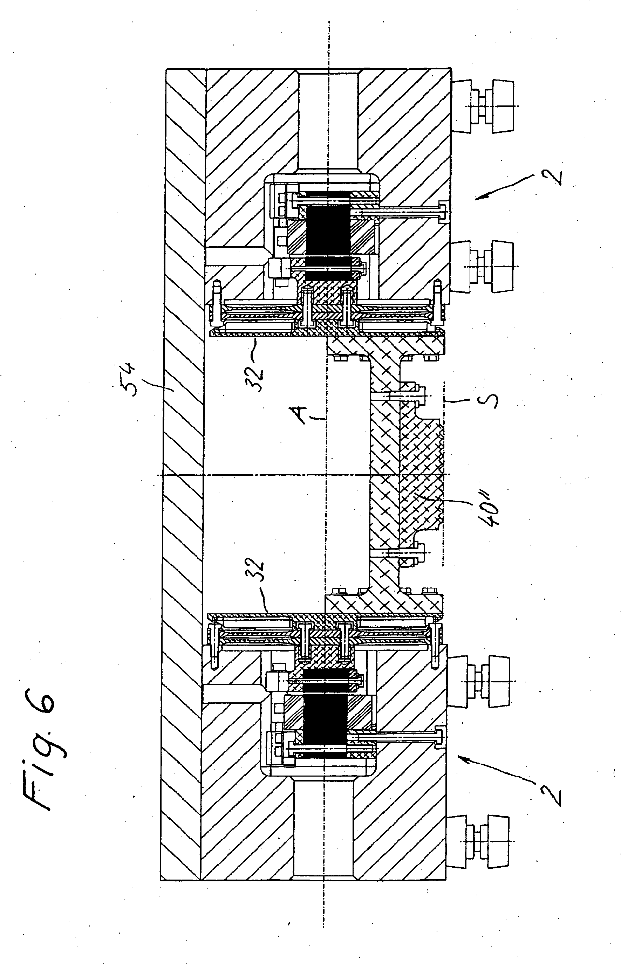

Die Vibrationsschweißanlage der Fig. 6 entspricht weitgehend derjenigen in Fig. 5. Unterschiedlich ist lediglich, dass das gemeinsame Werkzeug 40" an den Werkzeugträgern 32 der beiden Schwingköpfe so angebracht wird, dass die Schweißachse S radial versetzt zur Antriebsachse A liegt. Die Anordnung ist hierbei so getroffen, dass die Schweißfläche und Schweißachse S ungefähr auf Höhe der Unterseiten der Massekörper 4 der Schwingköpfe 2 liegen. Damit ergibt sich zwar ein Aufbau der Vibrationsschweißanlage ähnlich wie bei den eingangs diskutierten Vibrationsschweißanlagen des Standes der Technik. Erhalten bleibt jedoch der Vorteil, dass die Schwingungen der Federscheiben 22 und der Werkzeugträger 32 mittig in der Antriebsachse A erfolgen. Außerdem sind die Federanordnungen 20 der Schwingköpfe 2 kostengünstiger herzustellen als die Federanordnungen des Standes der Technik. Ein weiterer Vorteil dieser Ausführungsform, der im übrigen auch für die Ausführungsformen der Figuren 5 und 7, 8 gilt, besteht darin, dass der Abstand zwischen den beiden Schwingköpfen auf relativ einfache Weise variabel gestaltet werden kann. Schließlich bietet die Anordnung der Fig. 6 die Möglichkeit, auch relativ groß dimensionierte Werkstücke verschweißen zu können, was mit der Vibrationsschweißanlage der Fig. 5 aufgrund von Platzbeschränkungen unter Umständen nicht möglich wäre.

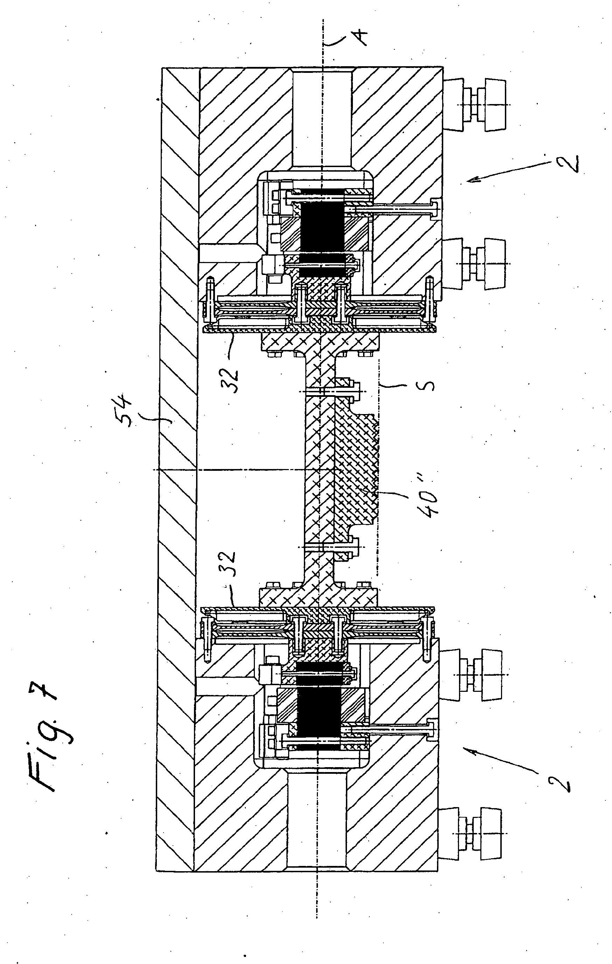

Die Ausführungsform der Fig. 7 entspricht weitgehend denjenigen der Figuren 5 und 6. Unterschiedlich ist lediglich, dass das gemeinsame Werkzeug 40" an den Werkzeugträgern der beiden Schwingköpfe so angebracht ist, dass die Mittenachse des Werkzeuges 40" mit der Antriebsachse A zusammenfällt. Daher befindet sich zwar die Schweißachse S radial außerhalb der Antriebsachse A; aufgrund der Massensymmetrie der Antriebskomponenten ist jedoch die mechanische Belastung des Schwingkopfes relativ gering.

Bei den Ausführungsbeispielen der Figuren 5 bis 7 sind die beiden Schwingköpfe 2 mechanisch dadurch miteinander gekoppelt, dass einerseits die beiden Werkzeugträger 32 durch ein gemeinsames Werkzeug 40" und andererseits die beiden Massekörper 4 durch ein Brückenglied 54 fest miteinander verbunden sind. Aufgrund der mechanischen Verbindung der beiden Massekörper 4 verfügt die Vibrationsschweißanlage über ein einziges Massesystem, so dass sich selbsttätig eine gemeinsame Frequenz der Schwingungen beider Schwingköpfe einstellt.

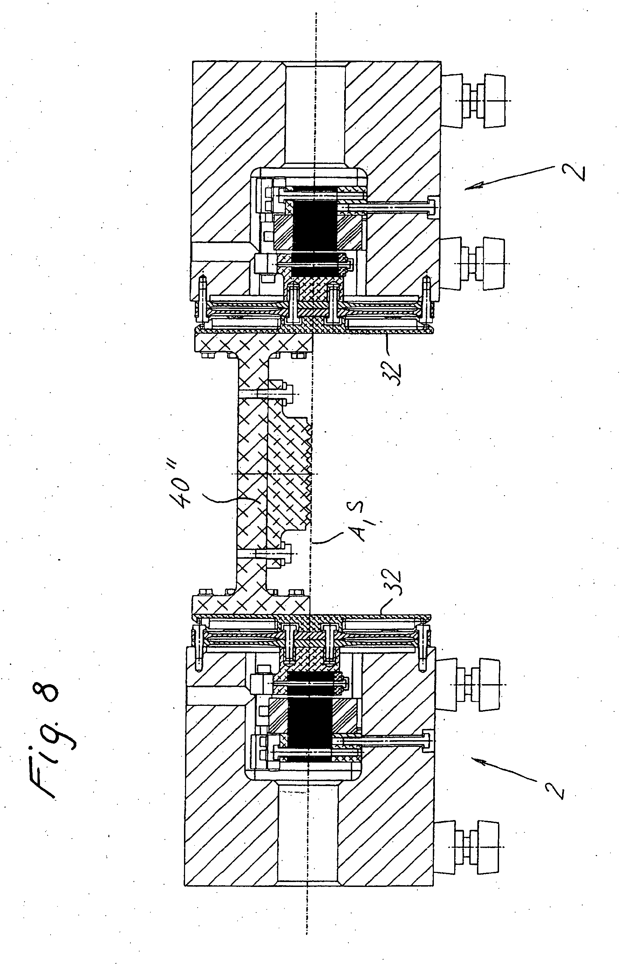

Bei dem Ausführungsbeispiel der Fig. 8 ist das Brückenglied weggelassen. Die Massekörper 4 der beiden Schwingköpfe sind daher mechanisch entkoppelt. Eine mechanische Verbindung zwischen den beiden Schwingköpfen erfolgt somit lediglich über das gemeinsame Werkzeug 40" zwischen den beiden Werkzeugträgern 32.

Da sich bei dieser Anordnung eine gemeinsame Frequenz der Schwingungen beider Schwingköpfe nicht selbsttätig einstellt, muss eine entsprechende elektrische Koppelung der beiden Schwingköpfe vorgesehen werden. Hierbei werden die Frequenz und die Amplitude der Schwingungen der beiden Schwingköpfe so gesteuert bzw. geregelt, dass die Frequenz der beiden Schwingköpfe übereinstimmt und die Amplitude gegenphasig ist. Eine derartige Ausführungsform kann zweckmäßig sein, wenn spezielle Platzverhältnisse oder ein großer Abstand der beiden Schwingköpfe 2 die Verwendung einer mechanischen Kopplung über ein Brückenglied erschweren.

Die in den Figuren 3 bis 8 dargestellten Ausführungsbeispiele stellen nur eine beschränkte Anzahl möglicher geometrischer Konfigurationen von zwei oder mehr Schwingköpfen dar. So sind beispielsweise Anordnungen möglich, bei denen einzelne Schwingköpfe, wie in den Figuren 3 und 4 dargestellt sind, oder auch Schwingkopfpaare, wie sie in den Figuren 5 bis 8 dargestellt sind, nebeneinander angeordnet werden, welche dann mechanisch und/oder elektrisch miteinander gekoppelt werden. Insbesondere sind Anordnungen möglich, bei denen sowohl die Werkzeugträger wie auch die Massekörper der Schwingköpfe mechanisch entkoppelt sind, so dass dann eine Synchronisation der Schwingungen der Schwingköpfe ausschließlich über eine elektrische Koppelung erfolgt. Mit derartigen Anordnungen lassen sich dann beliebig große bzw. beliebig geformte Werkstücke miteinander verschweißen. Die Anzahl der eingesetzten Schwingköpfe ist dann nur durch die technische Umsetzbarkeit bzw. die Möglichkeiten der elektrischen Ansteuerung der elektromagnetischen Antriebe begrenzt.

## Patentansprüche

1. Schwingkopf für eine Vibrationsschweißanlage, mit
einem stationären Massekörper (4),
einem Werkzeugträger (32) mit einem Werkzeug (40; 40'; 40") zum Halten eines Werkstückes (W1), und
einem elektromagnetischen Antrieb (12) mit einer bestrombaren Spulenanordnung (14) und einer Weicheisenanordnung (16), die auf einer gemeinsamen Antriebsachse (A) liegen und durch einen Luftspalt (18) voneinander getrennt sind,
wobei die Spulenanordnung (14) am Massekörper (4) festgelegt ist und die Weicheisenanordnung (16) über eine Federanordnung (20) mit dem Werkzeugträger (32) so verbunden ist, dass der Werkzeugträger (32) lineare Schwingungen für einen Reibschweißvorgang am Werkstück (W1) längs einer Schweißachse (S) ausführen kann, und
die Federanordnung (20) mindestens eine auf der Antriebsachse (A) senkrecht stehende Federscheibe (22) aufweist, die in einem Umfangsbereich (28) am Massekörper (4) festgelegt ist und in einem zentralen Bereich (24) mit der Weicheisenanordnung (16) und dem Werkzeugträger (32) fest verbunden ist, so dass die Schwingungen des Werkzeugträgers (32) rein lineare Schwingungen längs der Antriebsachse (A) sind,
**dadurch gekennzeichnet, dass** die Federscheibe (22) kreisrund ausgebildet ist.

2. Schwingkopf nach Anspruch 1, **dadurch gekennzeichnet, dass** die Federrate der Federanordnung (20) konstant ist.

3. Schwingkopf nach Anspruch 1 oder 2, **dadurch gekennzeichnet, dass** die Federanordnung (20) mindestens zwei Federscheiben (22) aufweist, die in ihren Umfangsbereichen (28) und in ihren zentralen Bereichen (24) aneinander anliegen und im Übrigen beabstandet zueinander sind.

4. Schwingkopf nach einem der vorhergehenden Ansprüche, **dadurch gekennzeichnet, dass** die Federanordnung (20) mit dem Massekörper (4) und mit der Weicheisenanordnung (16) sowie dem Werkzeugträger (32) jeweils durch Schraubverbindungen (30, 34) verbunden ist.

5. Schwingkopf nach einem der vorhergehenden Ansprüche, **dadurch gekennzeichnet, dass** der Werkzeugträger (32) als Platte ausgebildet ist, die parallel zu jeder der Federscheiben (22) verläuft, wobei das Werkzeug (40; 40'; 40") an der vom Antrieb (12) abgewandten Seite des Werkzeugträgers (32) lösbar angebracht ist.

6. Schwingkopf nach Anspruch 5, **dadurch gekennzeichnet, dass** das Werkzeug (40; 40'; 40") am Werkzeugträger (32) so angebracht ist, dass die Schweißachse (S) mit der Antriebsachse (A) zusammenfällt.

7. Schwingkopf nach Anspruch 6, **dadurch gekennzeichnet, dass** das Werkzeug (40; 40'; 40") am Werkzeugträger (32) so angebracht ist, dass die Schweißachse (S) radial versetzt zu der Antriebsachse (A) verläuft.

8. Schwingkopf nach Anspruch 7, **dadurch gekennzeichnet, dass** das Werkzeug (40; 40'; 40") am Werkzeugträger (32) so angebracht ist, dass eine mittige Achse des Werkzeuges mit der Antriebsachse (A) zusammenfällt.

9. Schwingkopf nach einem der vorhergehenden Ansprüche, **dadurch gekennzeichnet, dass** der Werkzeugträger (32) mit dem daran angebrachten Werkzeug (40) bezüglich eines stationär angeordneten Werkzeuges (44) so ausgebildet ist, dass zwei Werkstücke (W1, W2) miteinander verschweißbar sind.

10. Schwingkopf nach einem der Ansprüche 1 bis 8, **dadurch gekennzeichnet, dass** der Werkzeugträger (32) mit dem daran angebrachten Werkzeug (40') bezüglich zweier stationär angeordneter Werkzeuge (46, 48) so ausgebildet ist, dass drei Werkstücke (W1, W2, W3) miteinander verschweißbar sind.

11. Vibrationsschweißanlage mit einem Schwingkopf nach einem der Ansprüche 1 bis 10, **dadurch gekennzeichnet, dass** der Schwingkopf (2) als einzelner Schwingkopf ausgebildet und betreibbar ist, wobei sein Werkzeug (40) frei tragend am Werkzeugträger (32) angebracht ist.

12. Vibrationsschweißanlage mit zwei oder mehr Schwingköpfen (2) nach einem der Ansprüche 1 bis 10, **dadurch gekennzeichnet, dass** die Schwingköpfe (2) mechanisch und/oder elektrisch miteinander gekoppelt sind.

13. Vibrationsschweißanlage nach Anspruch 12, **dadurch gekennzeichnet, dass** die Werkzeugträger (32) mindestens zweier Schwingköpfe (2) durch ein gemeinsames Werkzeug (40'; 40") fest miteinander verbunden sind.

14. Vibrationsschweißanlage nach Anspruch 12 oder 13, **dadurch gekennzeichnet, dass** die Massekörper (4) mindestens zweier Schwingköpfe (2) durch ein Brückenglied (54) fest miteinander verbunden sind.

15. Vibrationsschweißanlage nach Anspruch 12, **dadurch gekennzeichnet, dass** sowohl die Werkzeugträger (32) wie auch die Massekörper (4) der Schwingköpfe (2) mechanisch entkoppelt sind.

## Claims

1. Oscillating head for a vibration welding device having
a fixed mass body (4),
a tool head (32) having a tool (40; 40'; 40") for holding a work piece (W1), and
an electromagnetic drive (12) having an energisable coil arrangement (14) and a soft iron arrangement (16) arranged on a common drive axis (A) and separated from each other by an air gap (18),
wherein the coil arrangement (14) is fixed at the mass body (4) and the soft iron arrangement (16) is connected via a spring arrangement (20) with the tool head (32) in such a way that the tool head (32) may perform linear oscillations for a friction welding process at the work piece (W1) along a welding axis (S), and
the spring arrangement (20) comprises at least one spring washer (22) standing vertically on the drive axis (A), which is fixed in an circumferential portion (28) at the mass body (4) and which is fixedly connected in a central portion (24) with the soft iron arrangement (16) and the tool head (32) so that the oscillations of the tool head (42) are pure linear oscillations along the drive axis (A),
**characterised in that** the spring washer (22) is formed circular.

2. Oscillating head according to claim 1, **characterised in that** the spring rate of the spring arrangement (20) is constant.

3. Oscillating head according to claim 1 or 2, **characterised in that** the spring arrangement (20) comprises at least two spring washers (22) which abut each other in their circumferential portions (28) and in their central portions (24) and which are spaced from each other for the rest.

4. Oscillating head according to one of the preceding claims, **characterised in that** the spring arrangement (20) is connected to the mass body (4) and the soft iron arrangement (16) as well as to the tool head (42) via screw connections (30, 34), respectively.

5. Oscillating head according to one of the preceding claims, **characterised in that** the tool head (32) is formed as a plate arranged parallel to each of the spring washers (22), wherein the tool (40; 40'; 40") is removably arranged at the side of the tool head (32) which is turned away from the drive (12).

6. Oscillating head according to claim 5, **characterised in that** the tool (40; 40'; 40") is arranged at the tool head (32) in such a way that the welding axis (S) is coextensive with the drive axis (A).

7. Oscillating head according to claim 6, **characterised in that** the tool (40; 40'; 40") is arranged at the tool head (32) in such a way that the welding axis (S) is arranged radially offset from the drive axis (A).

8. Oscillating head according to claim 7, **characterised in that** the tool (40; 40'; 40") is arranged at the tool head (32) in such a way that a central axis of the tool is coextensive with the drive axis (A).

9. Oscillating head according to one of the preceding claims, **characterised in that** the tool head (32) with the tool (40) mounted thereon is formed with respect to a stationary arranged tool (44) in such a way that two work pieces (W1, W2) are weldable to each other.

10. Oscillating head according to one of the claims 1 to 8, **characterised in that** the tool head (32) with the tool (40') mounted thereon is formed with respect to two stationary arranged tools (46, 48) in such a way that three work pieces (W1, W2, W3) are weldable to each other.

11. Vibration-welding device having an oscillating head according to one of the claims 1 to 10, **characterised in that** the oscillating head (2) is formed and operable as single oscillating head, wherein the tool (40) is arranged at the tool head (32) in a cantilevered way.

12. Vibration welding device with two or more oscillating heads (2) according to one of the claims 1 to 10, **characterised in that** the oscillating heads (2) are mechanically and/or electrically coupled to each other.

13. Vibration welding device according to claim 12, **characterised in that** the tool heads (32) of at least two oscillating heads (2) are fixedly connected to each other via a common tool (40'; 40").

14. Vibration welding device according to claim 12 or 13, **characterised in that** the mass bodies (4) of at least two oscillating heads (2) are fixedly connected to each other via a bridge member (54).

15. Vibration welding device according to claim 12, **characterised in that** the tool head (32) as well as the mass body (4) of the oscillating heads (2) are mechanically decoupled.

## Revendications

1. Tête oscillante pour une installation de soudage par vibration, avec
un corps massif (4) stationnaire,
un support d'outil (32) avec un outil (40 ; 40' ; 40") pour le maintien d'une pièce usinée (W1), et
un entraînement électromagnétique (12) avec un ensemble de bobine (14) apte à être alimenté en courant et un ensemble en fer doux (16), lesquels se trouvent sur un axe d'entraînement (A) commun et sont séparés l'un de l'autre par un entrefer (18),
dans laquelle l'ensemble de bobine (14) est fixé sur le corps massif (4) et l'ensemble en fer doux (16) est relié au support d'outil (32) par un ensemble à ressort (20), de manière à ce que le support d'outil (32) puisse effectuer des oscillations linéaires pour un procédé de soudage par friction sur la pièce usinée (W1) le long d'un axe de soudage (S), et
l'ensemble à ressort (20) comporte au moins une rondelle ressort (22) placée verticalement sur l'axe d'entraînement (A) et fixée sur le corps massif (4) dans une région périphérique (28), tout en étant reliée fixement à l'ensemble en fer doux (16) et au support d'outil (32) dans une région centrale (24), de sorte que les oscillations du support d'outil (32) sont des oscillations purement linéaires le long de l'axe d'entraînement (A),
**caractérisée en ce que** la rondelle ressort (22) est conçu circulaire.

2. Tête oscillante selon la revendication 1, **caractérisée en ce que** la force de rappel de l'ensemble à ressort (20) est constante.

3. Tête oscillante selon la revendication 1 ou 2, **caractérisée en ce que** l'ensemble à ressort (20) comporte au moins deux rondelles ressort (22) appliquées l'une contre l'autre dans leurs régions périphériques (28) et leurs régions centrales (24) et espacées l'une de l'autre dans les autres régions.

4. Tête oscillante selon l'une des revendications précédentes, **caractérisée en ce que** l'ensemble à ressort (20) est relié au corps massif (4) et à l'ensemble en fer doux (16) ainsi qu'au support d'outil (32) par des assemblages par vissage (30, 34) respectifs.

5. Tête oscillante selon l'une des revendications précédentes, **caractérisée en ce que** le support d'outil (32) est conçu comme un plateau s'étendant parallèlement à chacune des rondelles ressort (22), dans laquelle l'outil (40 ; 40' ; 40") est fixé de façon détachable du côté du support d'outil (32) qui est détourné de l'entraînement (12).

6. Tête oscillante selon la revendication 5, **caractérisée en ce que** l'outil (40 ; 40' ; 40") est fixé de telle manière sur le support d'outil (32), que l'axe de soudage (S) coïncide avec l'axe d'entraînement (A).

7. Tête oscillante selon la revendication 6, **caractérisée en ce que** l'outil (40 ; 40' ; 40") est fixé de telle manière sur le support d'outil (32), que l'axe de soudage (S) s'étend de façon radialement décalée par rapport à l'axe d'entraînement (A).

8. Tête oscillante selon la revendication 7, **caractérisée en ce que** l'outil (40 ; 40' ; 40") est fixé de telle manière sur le support d'outil (32), qu'un axe médian de l'outil coïncide avec l'axe d'entraînement (A).

9. Tête oscillante selon l'une des revendications précédentes, **caractérisée en ce que** le support d'outil (32) avec l'outil (40) fixé dessus par rapport à un outil (44) agencé fixement est conçu de manière à pouvoir souder deux pièces usinées (W1, W2) ensemble.

10. Tête oscillante selon l'une des revendications 1 à 8, **caractérisée en ce que** le support d'outil (32) avec l'outil (40') fixé dessus par rapport à deux outils (46, 48) agencés fixement est conçu de manière à pouvoir souder trois pièces usinées (W1, W2, W3) ensemble.

11. Installation de soudage par vibration, avec une tête oscillante selon l'une des revendications 1 à 10, **caractérisée en ce que** la tête oscillante (2) est conçue comme une tête oscillante unique apte à être actionnée, dans laquelle son outil (40) est fixé de manière à faire saillie librement sur le support d'outil (32).

12. Installation de soudage par vibration avec deux ou plusieurs têtes oscillantes (2) selon l'une des revendications 1 à 10, **caractérisée en ce que** les têtes oscillantes (2) sont accouplées les unes aux autres mécaniquement et/ou électriquement.

13. Installation de soudage par vibration selon la revendication 12, **caractérisée en ce que** les supports d'outil (32) d'au moins deux têtes oscillantes (2) sont reliées fixement entre elles par un outil commun (4.0' ; 40").

14. Installation de soudage par vibration selon la revendication 12 ou 13, **caractérisée en ce que** les corps massifs (4) d'au moins deux têtes oscillantes (2) sont reliés fixement entre eux par un élément de pontage (54).

15. Installation de soudage par vibration selon la revendication 12, **caractérisée en ce qu'**aussi bien les supports d'outil (32) que les corps massifs (4) des têtes oscillantes (2) sont désaccouplés mécaniquement.
